# FASCICULE DE BREVET EUROPEEN

(11) **EP 0 902 866 B1**
(45) Date de publication et mention de la délivrance du brevet: **07.08.2002**
(21) Numéro de dépôt: 97924072.8
(22) Date de dépôt: 12.05.1997
(51) Int. Cl.: F16D 69/02

(54) **ELEMENT DE FRICTION EN MATERIAU FRITTE, PROCEDE POUR SA FABRICATION ET APPLICATION A UN SYSTEME DE FREINAGE NOTAMMENT FERROVIAIRE**
SINTERREIBBELAGELEMENT, VERFAHREN ZU SEINER HERSTELLUNG UND VERWENDUNG BZW. FÜR EISENBAHNBREMSYSTEM
FRICTION MEMBER MADE OF SINTERED MATERIAL, METHOD FOR MAKING SAME, AND USE THEREOF IN A BRAKING SYSTEM, PARTICULARLY FOR ROLLING STOCK

(30) Priorité: 14.05.1996 FR 9605969
(43) Date de publication de la demande: 24.03.1999
(73) Titulaire: USINES DEHOUSSE, 64000 Pau (FR)
(72) Inventeur: TICO, Béatrice, F-64000 Pau (FR); FALANCHERE, Didier, F-64290 Gan (FR); IRIGARY, Jean-Claude, F-64110 Mazères Lezons (FR); BARBAZA, François, F-64290 Gan (FR)
(74) Mandataire: Joly, Jean-Jacques
(86) Numéro de dépôt international: FR9700833
(87) Numéro de publication internationale: WO9743560

(56) Documents cités:
- EP-A- 0 458 709
- DE-A- 2 139 386
- FR-A- 858 878
- FR-A- 1 180 922
- FR-A- 1 221 382
- FR-A- 1 276 929
- US-A- 2 892 707

## Description

La présente invention concerne la réalisation d'éléments de friction en matériau fritté. Un domaine particulier d'application est la réalisation de garnitures de friction coopérant avec des disques dans des systèmes de freinage, notamment ferroviaire.

Les éléments de friction, en particulier pour des applications ferroviaires, sont soumis à des exigences sévères en ce qui concerne les propriétés physiques et les propriétés tribologiques.

Ainsi, il est nécessaire que les éléments de friction, par exemple sous forme de plots, présentent en service une résistance élevée à l'éclatement et au fluage, et ce de préférence sans faire appel à des accessoires tels qu'enveloppes ou grillages.

En outre, il est souhaitable que le matériau constitutif des éléments de friction permette d'élaborer ceux-ci avec des formes relativement complexes, par exemple avec des collerettes, épaulements ou lamages, sans création de zones fragiles. En effet, il est alors possible de conférer aux éléments de friction une forme particulièrement adaptée à leur assemblage mécanique sur un support sans faire appel à des techniques de soudure ou de brasage et, ainsi, de minimiser le risque de perte d'élément en service.

Enfin, sur le plan tribologique, une grande stabilité du coefficient de frottement est requise, notamment pour les applications au freinage ferroviaire, indépendamment de la pression de freinage, de la température, de l'atmosphère environnante et de la vitesse.

De nombreuses techniques de fabrication d'éléments de friction ont été proposées, voir par exemple DE-A-2 139 386, comportant un pressage à froid d'un mélange de poudres de liant métallique, de charges dures et de lubrifiant, suivi d'un frittage et éventuellement d'une liaison sous pression à chaud avec un élément de support, mais sans satisfaire complètement à l'ensemble des exigences ci-dessus.

La présente invention a pour but de remédier à cette situation, en particulier pour foumir des éléments de friction frittés capables d'être réalisés sous des formes relativement complexes, tout en présentant par eux-mêmes les résistances nécessaires à l'éclatement, à la fragmentation et au fluage, et capables d'offrir, en friction sur eux-mêmes ou sur d'autres matériaux, un coefficient de frottement suffisamment élevé et stable, notamment de façon indépendante de la température, et que le milieu environnant soit sec ou humide.

Selon un premier aspect, la présente invention a pour objet un procédé de fabrication d'un élément de friction en un matériau comprenant un liant métallique, au moins un lubrifiant et des charges sous forme de particules dures, le procédé comportant les étapes de mélange de poudres des différents constituants du matériau, de mise en forme du mélange sous pression, et de frittage,
procédé caractérisé en ce que l'on utilise au moins pour le liant métallique et les particules dures, des poudres dont la granulométrie ne dépasse pas 250 microns, et en ce que le mélange de poudres, après avoir été mis en forme, est soumis à un premier frittage, puis à un forgeage à chaud, et ensuite à un deuxième frittage.

Du fait que les constituants de départ, notamment le liant métallique et les particules dures, sont sous forme de poudres de granulométrie limitée, il est possible d'obtenir un élément de friction qui présente une très bonne homogénéité chimique et physique macroscopique, c'est-à-dire une répartition homogène de ses différents éléments constitutifs. La réalisation d'un deuxième frittage après forgeage à chaud, qui est une caractéristique du procédé selon l'invention, permet de conférer au matériau final la porosité souhaitée pour avoir un coefficient de frottement stable et un faible coefficient d'expansion thermique. En effet, la faible granulométrie des poudres fait qu'après forgeage à chaud, et en dépit du premier frittage ayant permis d'accroître la porosité par rapport à sa valeur après compression à froid, la porosité du matériau est suffisante. De plus, la structure fine du mélange de poudres permet, en combinaison avec le procédé comprenant les étapes de premier frittage, forgeage intermédiaire et second frittage, de diminuer les contraintes d'écoulement à chaud lors du forgeage intermédiaire afin d'élaborer des formes relativement complexes, tout en conservant des propriétés mécaniques élevées qui permettent au matériau de résister efficacement à l'éclatement, à l'effritement et au fluage. Des accessoires de maintien tels qu'enveloppes, ceintures ou grillages, peuvent alors être superflus.

De préférence, l'on utilise, pour le lubrifiant une poudre de graphite dont la granulométrie ne dépasse pas 600 microns tout en conservant une structure cristalline, qui contribue à la stabilité du coefficient de frottement. De façon classique, on utilise pour le liant métallique une poudre d'au moins un des matériaux du groupe comprenant le bronze, le cuivre, le fer et le cupro-phosphore. Afin d'atteindre la meilleure homogénéité possible, de préférence au moins 90 % en poids de la poudre a une granulométrie comprise entre 80 % et 120 % de la valeur moyenne de granulométrie de la poudre.

Quant aux charges sous forme de particules dures, elles peuvent être obtenues à partir d'une poudre d'au moins un des matériaux du groupe comprenant des oxydes métalliques, des carbures et des métaux. Ces charges assurent en particulier la stabilité du coefficient de frottement, la réduction des bruits engendrés par le frottement, le contrôle de l'usure du matériau de friction et le nettoyage de la surface de frottement. A titre d'exemples, des poudres d'oxydes d'aluminium, de silicium, de verre, ou de fer, ou des poudres de carbures de bore, de silicium ou de tungstène, ou des poudres d'alliage ferro-chrome ou de molybdène peuvent être utilisées. De préférence encore, pour la ou chaque poudre de particules dures, au moins 90 % en poids a une granulométrie comprise entre 80 % et 120 % de la granulométrie moyenne de la poudre.

Selon un autre de ses aspects, l'invention a pour objet un élément de friction en matériau fritté, tel qu'il peut notamment être obtenu par le procédé ci-dessus, constitué exclusivement: d'un liant métallique représentant entre 60 et 90 % en poids de l'élément et formées à partir de poudre ayant une granulométrie qui ne dépasse pas 250 microns, de particules dures représentant entre 2 et 30 % en poids de l'élément et formées à partir de poudres ayant une granulométrie qui ne dépasse pas 250 microns, et d'un lubrifiant représentant entre 2 et 15 % en poids de l'élément, constitué par du graphite cristallin formé à partir de poudres ayant une granulométrie qui ne dépasse pas 600 microns.

Outre ses propriétés mécaniques et sa capacité à être élaboré sous des formes relativement complexes lui permettant d'être facilement intégré dans une garniture de frein, un tel élément de friction est remarquable en ce qu'il présente un coefficient de frottement stable tant au regard des variations de température que vis-à-vis de variations du degré d'humidité du milieu environnant. En outre, cette stabilité peut être observée lorsque le matériau de l'élément de friction est en frottement non seulement sur lui-même mais aussi sur d'autres matériaux. Cela semble dû au fait que c'est le matériau fritté de l'élément de friction qui impose son comportement en frottement. Du fait de sa densité élevée et de sa faible porosité, suite au double frittage et au forgeage, le matériau fritté est moins sensible à l'humidité et impose sa performance en dureté, en essorage et en lubrification au matériau du disque antagoniste.

L'architecture de la garniture formée de plots est également un élément favorable pour la rupture du film d'eau en milieu humide.

Un tel élément de friction est donc particulièrement adapté à être intégré dans une garniture de freins coopérant avec un disque de frein d'un dispositif de freinage, selon encore un autre aspect de l'invention.

Le disque de frein, au moins dans son ou chacun de ses revêtements de friction peut être en acier, en acier silicié, en aluminium ou alliage d'aluminium tel que de l'aluminium silicié, en matériau à base de carbone, en matériau composite à matrice métallique, notamment à matrice aluminium, en matériau composite à matrice céramique, en matériau composite carbone-carbone, ou en matériau composite carbone-carbone siliciuré. Les matériaux préférés sont les aciers forgés ou moulés, les aciers siliciés, l'aluminium fortement silicié tel l'alliage AS17 et les matériaux composites carbone-carbone siliciurés.

Des résultats particulièrement bons ont été observés en freinage humide et en freinage de longue durée avec une association d'au moins une garniture de frein ayant un ou plusieurs éléments de friction selon l'invention, et d'un disque de frein dont le ou chaque revêtement de friction est en composite carbone-carbone siliciuré, ce qui selon encore un autre aspect de l'invention trouve une application avantageuse pour des systèmes de freinage ferroviaire, notamment pour des convois lourds ou des trains à grande vitesse.

En outre, l'élément de friction obtenu conformément à l'invention peut être associé à un disque de frein monobloc, ou à un disque formé au moins dans la ou chaque partie formant revêtement de friction, en deux secteurs ou plus, que le disque soit ventilé ou non.

Des exemples de réalisation de l'invention seront maintenant décrits à titre indicatif, nais non limitatif, notamment en référence aux dessins annexés dans lesquels :
- la figure 1 est une vue très schématique partielle en coupe d'une garniture de frein incorporant des éléments de friction réalisés conformément à l'invention ;
- la figure 2 illustre très schématiquement des étapes successives de réalisation d'un élément de friction fritté, selon un premier procédé conforme à l'invention ;
- la figure 3 illustre très schématiquement des étapes successives de réalisation d'un élément de friction fritté, selon un deuxième procédé conforme à l'invention ;
- la figure 4 est une vue de détail de la collerette métallique utilisée pour la mise en ouvre du procédé de la figure 3 ;
- la figure 5 illustre la variation du coefficient de frottement mesuré en utilisant une garniture de frein munie d'éléments de friction conformes à l'invention coopérant avec un disque de frein en acier, lors d'essais de simulation de freinage d'arrêt de type TGV, à sec et humide, pour différentes vitesses initiales ;
- les figures 6 à 8 illustrent les variations du coefficient de frottement et de la température, mesurées en fonction du temps, lors d'essais de freinage de maintien à sec, en utilisant une garniture de frein munie d'éléments de friction conformes à l'invention coopérant avec un disque de frein ayant un revêtement de friction respectivement en acier, en composite carbone-carbone, et en composite carbone-carbone siliciuré ; et
- les figures 9 et 10 illustrent les variations du coefficient de frottement et de la température, mesurées en fonction du temps, lors d'essais de freinage de maintien en milieu humide, en utilisant une garniture de frein munie d'éléments de friction conformes à l'invention coopérant avec un disque de frein en acier et en composite carbone-carbone siliciuré.

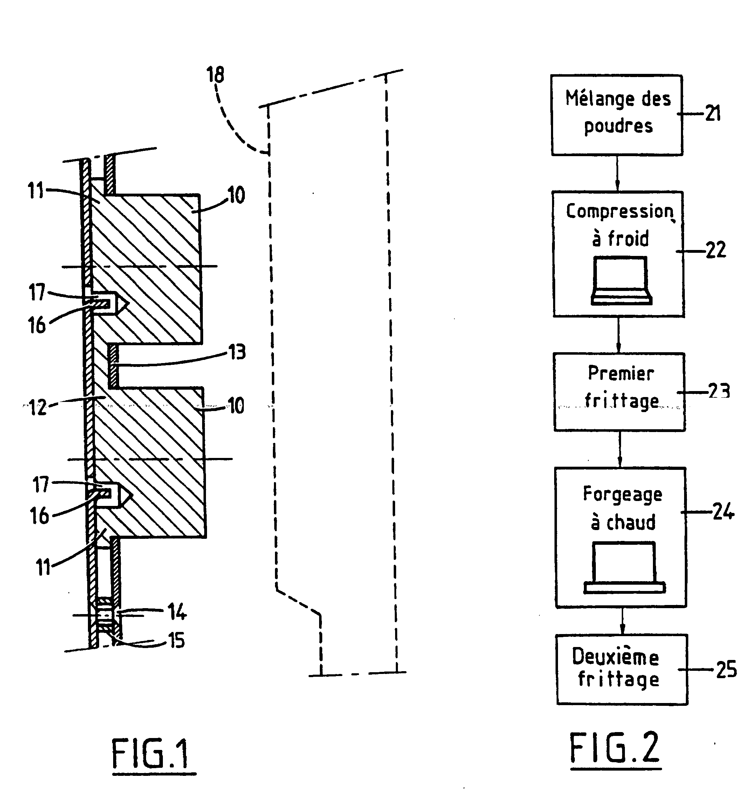

Un exemple de mise en oeuvre de l'invention sera maintenant décrit dans le cadre de la réalisation d'éléments de friction en forme de plots destinés à être montés sur une garniture de frein telle qu'illustrée par la figure 1 de façon schématique. Bien entendu, l'invention ne saurait être limitée à la réalisation d'éléments de friction ayant cette forme particulière, mais convient à la réalisation d'éléments de friction de toutes formes destinés notamment à des dispositifs de freinage ou d'embrayage et pouvant constituer des pièces de friction associées à des éléments fixes ou mobiles.

Sur la figure 1, la garniture de friction comprend une pluralité de plots 10 de forme cylindrique. Chaque plot 10 est réalisé en une seule pièce en matériau fritté avec une embase 11 à une de ses extrémités axiales. L'embase 11 permet le montage de chaque plot par serrage de l'embase entre une plaque arrière 12 et une plaque avant 13, les plots passant sans jeu à travers des trous formés dans la plaque avant. Les plaques 12 et 13 sont assemblées au moyen de rivets 14 avec interposition d'entretoises 15. Des languettes 16 constituées par des parties de la plaque arrière 12 découpées et repliées pénètrent dans des trous borgnes 17 formés à la base des plots 10 afin de s'opposer à une rotation de ceux-ci.

Les plots 10 sont réalisés par frittage et forgeage à partir de poudres des éléments constitutifs du matériau de friction des plots. Ces éléments comportent un liant, tel qu'un liant métallique classique choisi par exemple parmi le bronze, le cuivre, le fer et le cupro-phosphore, un lubrifiant, tel que du graphite, et des charges sous forme de particules dures choisies parmi des oxydes, des carbures et des métaux, par exemple des oxydes d'aluminium (Al₂O₃), de silicium (SiO₂), de fer (Fe₃O₄), des verres, tels qu'un borosilicate d'aluminium et de sodium connu sous la dénomination "Pyrex", des carbures de silicium (SiC), de tungstène (WC), de bore (B₄C), du ferro-chrome, du molybdène.

Le liant métallique représente entre 30 et 90 % environ du poids du matériau de friction et est obtenu à partir de poudre dont la granulométrie ne dépasse pas 300 microns. Le lubrifiant, tel que le graphite, représente entre 2 et 15 % environ du poids du matériau de friction et est obtenu à partir de poudre dont la granulométrie ne dépasse pas 600 microns tout en conservant une structure cristalline. Les charges représentent entre 2 et 30 % environ du poids du matériau de friction et sont obtenues à partir de poudres dont la granulométrie ne dépasse pas 250 microns. Comme déjà indiqué, tant pour la poudre de liant que pour la ou les poudres de particules dures, une trop grande dispersion de granulométrie doit de préférence être évitée pour obtenir une bonne homogénéité. C'est pourquoi il est préférable que pour au moins 90 % en poids de chaque poudre, la granulométrie soit comprise entre 80 % et 120 % de la granulométrie moyenne de la poudre.

Les différentes phases d'élaboration du matériau de friction sont les suivantes (figure 2).

Les poudres des constituants choisis sont mélangées dans les quantités prédéterminées de façon à obtenir un mélange aussi homogène que possible (étape 21). A cet effet, les poudres de densité élevée peuvent être introduites en premier dans un mélangeur, puis les poudres de densité faible et granulométrie fine et enfin les poudres de densité faible et granulométrie élevée. Chaque ajout est suivi d'un temps de mélange de 2 à 5 minutes.

La mise en forme du mélange est réalisée par compression à froid au moyen d'une presse munie d'éléments de moule permettant de réaliser des ébauches de plots (étape 22) ayant une forme voisine de celle des plots à réaliser. La pression de compression est par exemple comprise entre 500 et 800 MPa et est établie progressivement pour favoriser le dégazage des poudres et éviter les fissurations. Ainsi, la compression peut être réalisée au moyen d'une presse mécanique ou hydraulique dont les plateaux sont déplacés l'un vers l'autre à une vitesse comprise entre environ 1 et 50 mm/seconde.

Un premier frittage (étape 23) est alors réalisé dans un four sous atmosphère réductrice (par exemple un mélange d'azote et d'hydrogène). La température de frittage est comprise entre 800°C et 1000°C, suivant la composition du mélange et la durée de frittage est comprise entre 15 et 30 minutes.

Après le premier frittage, les ébauches sont portées à une température de forgeage comprise entre 750° C et 950° C, sous atmosphère réductrice (par exemple mélange d'azote et d'hydrogène). Le forgeage des plots est effectué sur presse de préférence hydraulique sous une pression comprise entre 800 et 1000 MPa établie progressivement. La presse est équipée de matrices dont les formes correspondent à celles des plots à réaliser. Le forgeage (étape 24) permet de conférer aux plots leur forme définitive, en particulier, dans l'exemple illustré, au niveau du raccordement de l'embase avec le reste du plot, et en formant le trou 17 (figure 1).

La structure fine et homogène du mélange favorise l'élaboration de formes complexes. C'est ainsi que le forgeage peut être utilisé pour réaliser des éléments de friction munis d'épaulements, de lamages. Dans le présent exemple, les trous 17 de blocage anti-rotation des plots sont réalisés lors du forgeage.

Le forgeage est réalisé après qu'une cohésion suffisante ait été apportée par le premier frittage et avant que la cohésion définitive soit conférée par un deuxième frittage réalisé après le forgeage. Le deuxième frittage (étape 25) est réalisé dans les mêmes conditions que le premier. Il permet non seulement d'apporter une cohésion définitive au matériau, mais aussi de ré-ouvrir la porosité qui a été pratiquement fermée lors du forgeage à chaud.

Dans ce qui précède, il est envisagé la réalisation de plots de friction monoblocs en matériau fritté.

Il est possible, en variante, d'associer au matériau fritté un insert métallique mis en place, de préférence, immédiatement avant forgeage à chaud. L'insert est par exemple une collerette entourant la partie de base du plot.

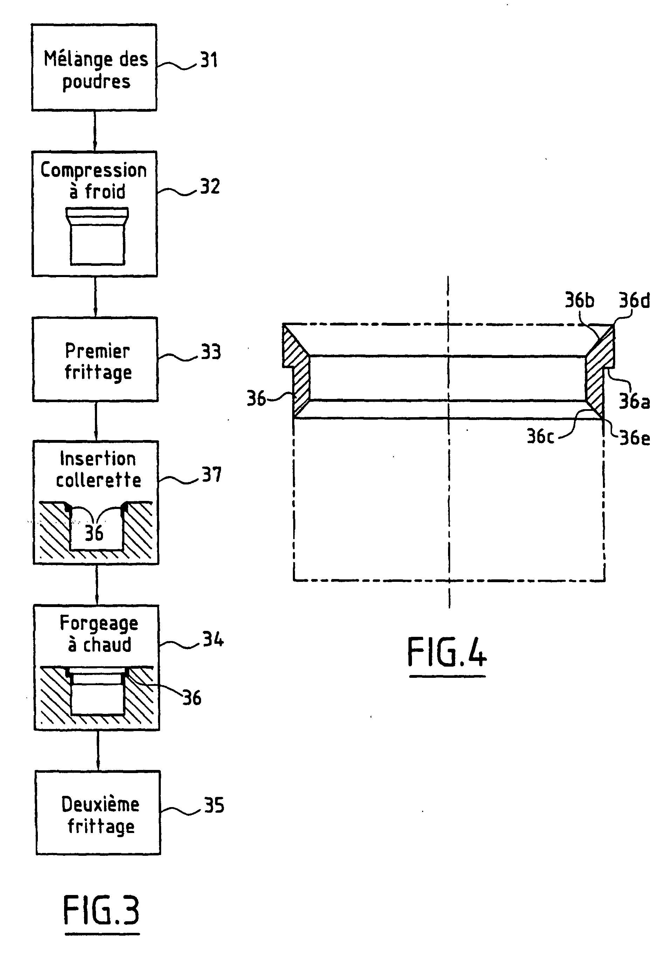

Ainsi, sur la figure 3, on retrouve, comme dans la figure 2, les étapes 31 de mélange des poudres, 32 de compression à froid et 33 de premier frittage. Une collerette métallique 36 est insérée dans une des formes de la presse de forgeage à chaud (étape 37) et le forgeage (étape 34) est réalisé avant le deuxième frittage 35. Les étapes de compression à froid, premier frittage, forgeage à chaud et deuxième frittage sont réalisées comme dans le procédé décrit plus haut.

La collerette métallique 36, représentée en détail sur la figure 4, est par exemple en acier ou bronze revêtu de cuivre. Elle présente un épaulement exteme 36a définissant l'embase du plot, et des chanfreins intemes 36b, 36c raccordent sa paroi cylindrique intérieure avec ses bords d'extrémité 36d, 36e. Lors du forgeage à chaud, le fluage du matériau ayant subi le premier frittage lui permet d'épouser la forme interne de la collerette, au niveau de la base du plot (représenté en traits mixtes sur la figure 4). Lors du deuxième frittage, le cuivre du revêtement de la collerette diffuse dans le matériau fritté, réalisant un « soudage diffusion » de la collerette sur la matériau fritté. Le plot présente ainsi une meilleure tenue aux vibrations.

Des exemples particuliers de réalisation de plots de friction conformément au procédé de l'invention seront maintenant décrits.

### Exemple 1

On réalise un mélange de poudres ayant les compositions et granulométries et dans les quantités indiquées dans le tableau ci-après :

| Nature de la poudre | Granulométrie | Parties en poids |
|---|---|---|
| Cuivre | < 160 microns | 80 ± 5 |
| Graphite | < 600 microns | 15 ± 5 |
| Molybdène | < 250 microns | 5 ± 2 |

Le mélange est mis en forme par compression à froid sous une pression de 600 Mpa réduisant la porosité à environ 10 % en volume. Un premier frittage est réalisé, amenant la porosité à eriviron 20 %, puis les produits sont forgés à chaud en amenant progressivement la pression à une valeur de 900 MPa. Le forgeage lent réduit la porosité à 1 % environ, au plus. Le deuxième frittage est réalisé comme le premier et ramène la porosité à une valeur souhaitée, dans cet exemple d'environ 7 %. Les plots ainsi obtenus sont montés tels quels sur des garnitures de frein de la façon illustrée par la figure 1. Un essai au banc est effectué en faisant frotter les garnitures sur les faces frottantes d'un disque de frein en acier (tel que le disque 18 montré partiellement en trait interrompus sur la figure 1). L'essai est réalisé à sec en simulant des freinages d'arrêt de type TGV avec une vitesse initiale variant de 30 à 220 km/h, une masse freinée par disque de 4 t et un effort total d'application des garnitures sur le disque de 20 kN. Aucun écaillage ou éclatement d'un plot de friction n'est observé.

### Exemple 2

On réalise un mélange de poudres ayant les compositions et granulométries et dans les quantités indiquées dans le tableau ci-après :

| Nature de la poudre | Granulométrie | Parties en poids |
|---|---|---|
| Cuivre | < 160 microns | 65 ± 5 |
| Cupro-phosphore | < 200 microns | 10 ± 5 |
| Graphite | < 600 microns | 8 ± 2 |
| Fer | < 200 microns | 15 ± 5 |
| Carbure de silicium | < 200 microns | 2 ± 1 |

Des plots sont réalisés et testés comme dans l'exemple 1. Aucun écaillage ou éclatement d'un plot n'est observé lors de l'essai.

### Exemple 3

On réalise un mélange de poudres ayant les compositions et granulométries et dans les quantités indiquées dans le tableau ci-après :

| Nature de la poudre | Granulométrie | Parties en poids |
|---|---|---|
| Cuivre | < 160 microns | 55 ± |
| Cupro-phosphore | < 200 microns | 10 ± |
| Graphite | < 600 microns | 10 ± |
| Fer | < 200 microns | 10 ± |
| Ferro-chrome | <250 microns | 5 ± 2 |
| Molybdène | < 250 microns | 5±2 |
| Carbure de tungstène | < 200 microns | 5 ± 2 |

Des plots sont réalisés et testés comme dans l'exemple 1. Aucun écaillage ou éclatement d'un plot n'est observé lors de l'essai.

### Exemple 4

On réalise un mélange de poudres ayant les compositions et granulométries et dans les quantités indiquées dans le tableau ci-après :

| Nature de la poudre | Granulométrie | Parties en poids |
|---|---|---|
| Bronze | < 160 microns | 58±5 |
| Graphite | < 600 microns | 10 ± 5 |
| Fer | < 200 microns | 10±5 |
| Molybdène | < 250 microns | 10 ± 5 |
| Carbure de bore | < 200 microns | 2±1 |
| "Pyrex" | < 100 microns | 10 ± 5 |

Des plots sont réalisés et testés comme dans l'exemple 1. Aucun écaillage ou éclatement d'un plot n'est observé lors de l'essai.

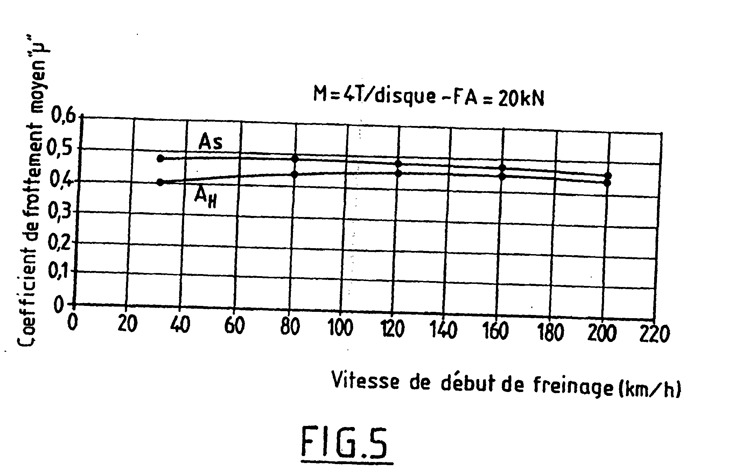

Le coefficient de frottement est mesuré pour différentes vitesses initiales. La courbe A_{S} de la figure 5 montre la variation du coefficient de frottement en fonction de la vitesse initiale.

L'essai est répété en condition de freinage humide et les coefficients de frottement sont mesurés pour différentes vitesses initiales. La courbe A_{H} de la figure 5 montre la variation du coefficient de frottement en fonction de la vitesse initiale.

Les courbes A_{S} et A_{H} montrent la grande stabilité du coefficient de frottement pour différentes vitesses initiales et lors du passage du freinage sec au freinage humide. On notera que la stabilité du coefficient de frottement vient non seulement de la porosité nécessaire à cet effet, obtenue par le deuxième frittage, mais aussi de l'utilisation de graphite cristallin qui, s'il apporte un coefficient de frottement moins élevé que celui du graphite nodulaire, donne à ce coefficient une meilleure stabilité.

### Exemple 5

On réalise un mélange de poudres ayant les compositions et granulométries et dans les quantités indiquées dans le tableau ci-après :

| Nature de la poudre | Granulométrie | Parties en poids |
|---|---|---|
| Bronze | < 160 microns | 67 ± 5 |
| Graphite | < 600 microns | 8 ± 2 |
| Fer | < 200 microns | 15 ± 5 |
| Ferro-chrome | < 250 microns | 5 ± 2 |
| Molybdène | < 250 microns | 5 ± 2 |

Des plots sont réalisés et testés comme dans l'exemple 1. Aucun écaillage ou éclatement d'un plot n'est observé lors de l'essai.

### Exemple 6

On réalise un mélange de poudres ayant les compositions et granulométries et dans les quantités indiquées dans le tableau ci-après :

| Nature de la poudre | Granulométrie | Parties en poids |
|---|---|---|
| Bronze | < 160 microns | 63 ± 5 |
| Graphite | < 600 microns | 8 ± 2 |
| Fer | < 200 microns | 17 ± 5 |
| Oxyde d'aluminium | < 100 microns | 5 ± 2 |
| Oxyde de silicium | < 100 microns | 5 ± 2 |
| Carbure de bore | < 200 microns | 2 ± 1 |

Des plots sont réalisés et testés comme dans l'exemple 1. Aucun écaillage ou éclatement d'un plot n'est observé lors de l'essai.

### Exemple 7

Cet exemple a pour objet de montrer le comportement des éléments de friction réalisés conformément à l'invention lorsqu'ils sont montés dans des garnitures de frein associées en frottement à sec à des disques de frein munis de revêtements de friction de différentes natures.

Les éléments de friction utilisés sont des plots réalisés conformément à l'exemple 4 et montés sur des garnitures de frein telles que celle illustrée par la figure 1. Les essais effectués sont des essais de freinage de maintien simulant un freinage continu destiné à limiter la vitesse d'un convoi ferroviaire dans une descente, dans des conditions d'essais normalisées par l'UIC (Union Internationale des Chemins de Fer) ou conformes à d'autres normes similaires nationales ou régionales.

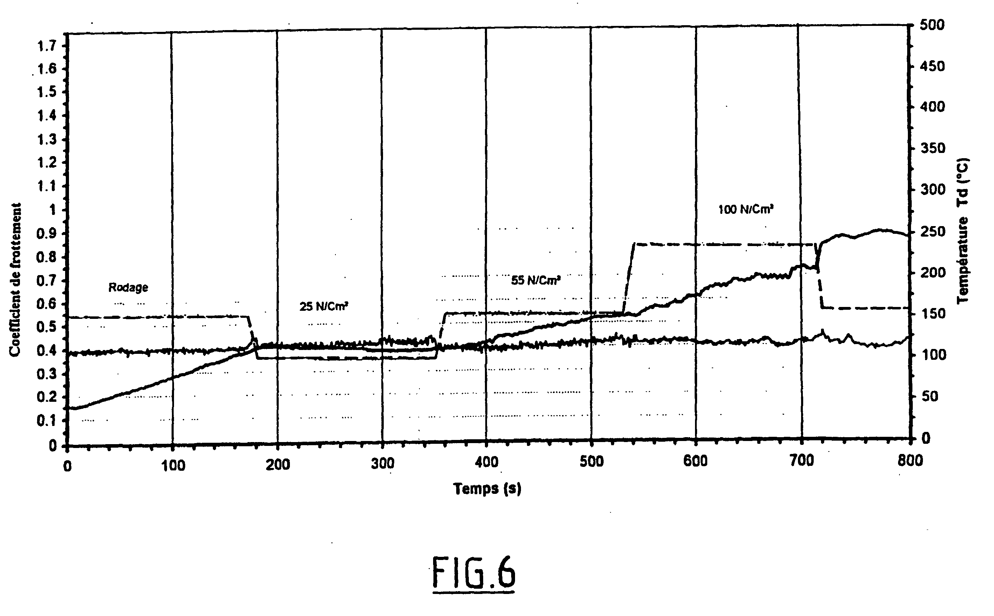

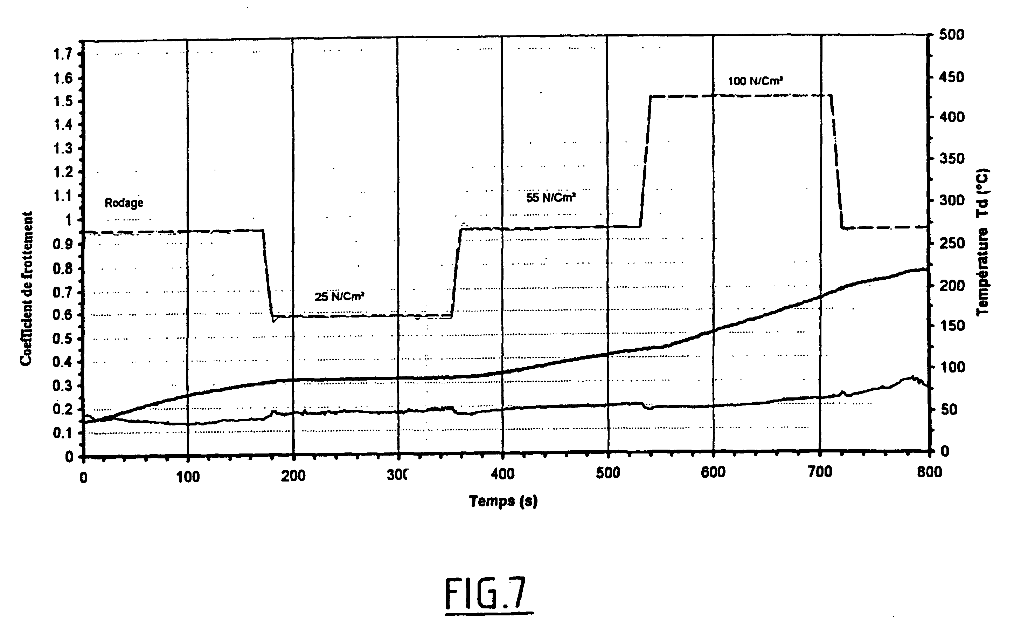

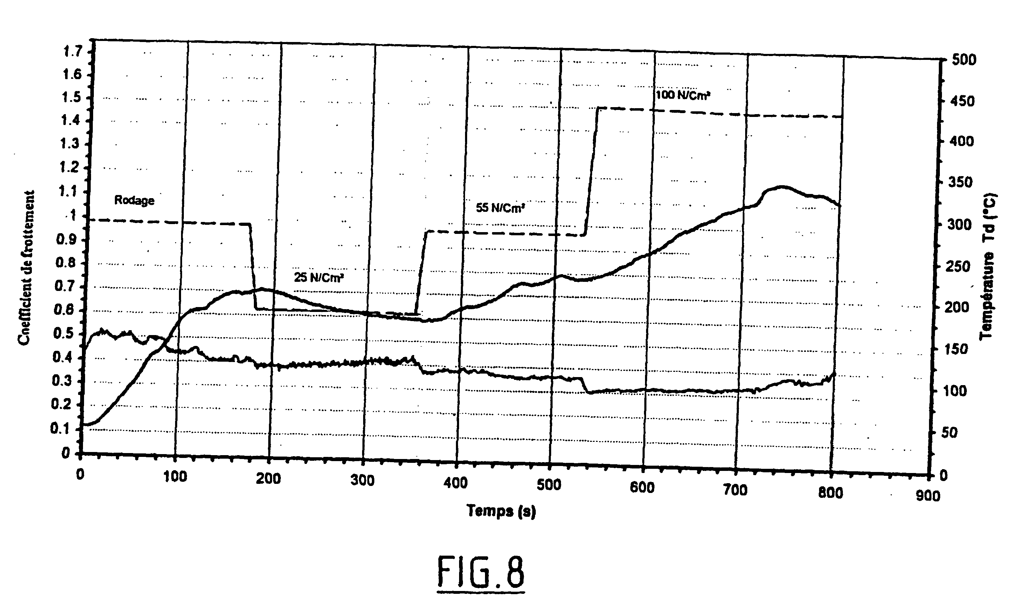

Les figures 6 à 8 montrent les courbes illustrant les variations en fonction du temps du coefficient de frottement et de la température mesurées lors des essais, avec des disques de frein dont les revêtements de friction sont respectivement en acier, en matériau composite carbone-carbone et en matériau carbone-carbone siliciuré. Sur les figures 6 à 8, les différents paliers de pression spécifique de freinage sont montrés en traits interrompus, le premier palier correspondant au rodage du frein (montée en température).

L'utilisation de matériaux composites carbone-carbone pour des pièces de friction est bien connue. Ces matériaux peuvent notamment être obtenus par réalisation d'une préforme fibreuse en fibres de carbone et densification de la préforme par une matrice de carbone comblant en partie la porosité de la préforme. La préforme fibreuse est par exemple constituée de strates bidimensionnelles, telles que des strates de tissu ou de nappes de fibres de carbone, qui peuvent être liées entre elles par aiguilletage comme décrit notamment dans la demande de brevet FR 85 09 820. La densification de la préforme par une matrice de carbone peut être réalisée de façon bien connue en soi, par exemple par infiltration chimique en phase vapeur.

Les matériaux composites carbone-carbone siliciurés sont des matériaux composites carbone-carbone ayant subi un traitement de siliciuration au sein de la porosité résiduelle de ces matériaux. Un exemple de procédé d'obtention de disques de frein en carbone-carbone siliciuré par infiltration de silicium fondu est décrit notamment dans la demande de brevet français déposée par la société française Société Européenne de Propulsion sous le No 95 13 458. La siliciuration du matériau composite carbone-carbone permet d'en combler la porosité résiduelle et d'améliorer sa résistance à l'oxydation.

Les figures 6 à 8 montrent une bonne régularité du coefficient de frottement, que le matériau de friction du disque de frein soit de l'acier, du carbone-carbone ou du carbone-carbone siliciuré, montrant la bonne adaptation de l'élément de friction obtenu conformément à l'invention à différents matériaux de friction antagonistes.

### Exemple 8

On procède comme dans l'exemple 7, à l'exception que les essais de freinage sont effectués en environnement humide.

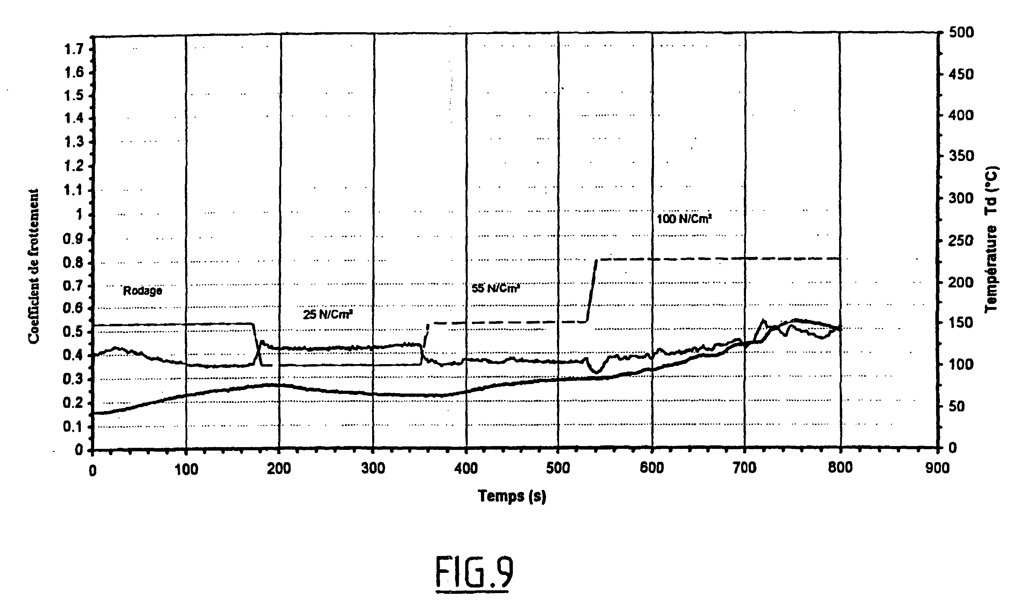

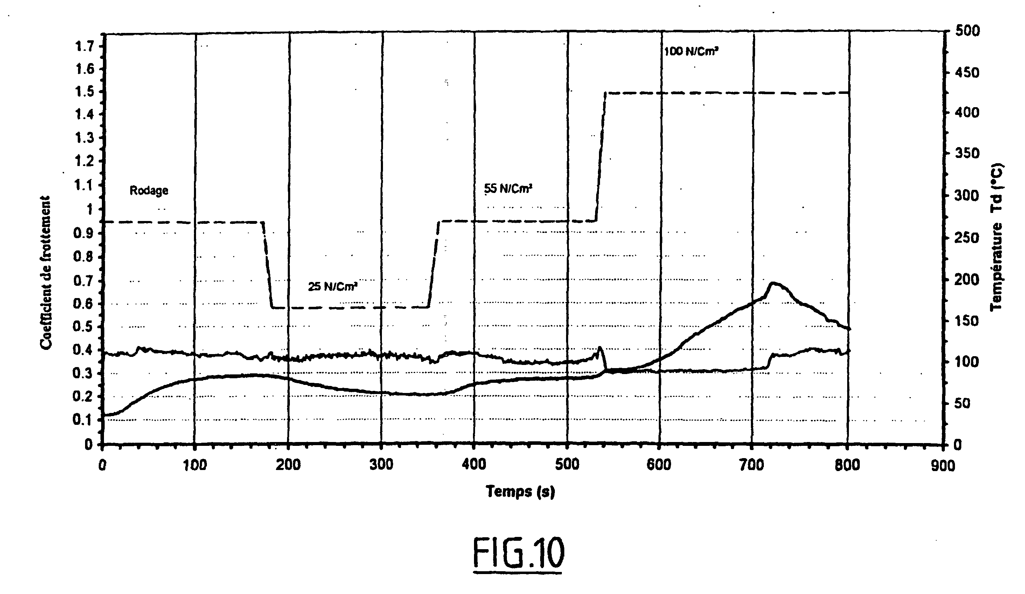

Les figures 9 et 10 montrent les courbes illustrant les variations en fonction du temps du coefficient de frottement et de la température mesurées lors des essais, respectivement avec des disques de frein dont les revêtements de friction sont en acier et en composite carbone-carbone siliciuré. Sur les figures 9 et 10, les paliers d'application de la pression de freinage sont indiqués en traits interrompus, pour différentes valeurs de pression spécifique.

Les figures 9 et 10 révèlent une bonne stabilité du coefficient de frottement, plus particulièrement lorsque le matériau des éléments de friction obtenus conformément à l'invention est associé avec du carbone-carbone siliciuré. En outre, les valeurs des coefficients de frottement mesurées à sec et en environnement humide sont sensiblement les mêmes.

Ainsi, les éléments de friction obtenus conformément à l'invention sont particulièrement avantageux du fait que :
- ils présentent en eux-mêmes les qualités mécaniques nécessaires pour résister à l'effritement ou à l'éclatement,
- ils peuvent être réalisés avec des formes relativement complexes, en particulier avec des embases permettant leur montage dans une pièce de frein ou d'embrayage par des moyens mécaniques, sans faire appel à des techniques de soudure et avec un risque réduit de perte d'éléments en service,
- ils peuvent être associés à des matériaux de friction de différentes natures tout en imposant le maintien d'un coefficient de frottement stable tant en freinage d'arrêt qu'en freinage de maintien et tant en environnement sec qu'en environnement humide, et
- ils sont particulièrement efficaces en tant qu'éléments de friction de garnitures de frein associées à des disques de frein constitués, au moins dans leurs parties de friction, de matériau composite carbone-carbone siliciuré.

## Revendications

1. Procédé de fabrication d'un élément de friction en un matériau comprenant un liant métallique, au moins un lubrifiant et des charges sous forme de particules dures, le procédé comportant les étapes de mélange de poudres des différents constituants du matériau, de mise en forme du mélange, et de frittage, **caractérisé en ce que** l'on utilise au moins pour le liant métallique et les particules dures, des poudres dont la granulométrie ne dépasse pas 250 microns, et **en ce que** le mélange de poudres, après avoir été mis en forme, est soumis à un premier frittage, puis à un forgeage à chaud, et ensuite à un deuxième frittage.

2. Procédé selon la revendication 1, **caractérisé en ce que** l'on utilise, pour le lubrifiant une poudre de graphite de structure cristalline dont la granulométrie ne dépasse pas 600 microns.

3. Procédé selon l'une quelconque des revendications 1 et 2, **caractérisé en ce que** l'on utilise, pour le liant métallique une poudre d'au moins un des matériaux du groupe comprenant le bronze, le cuivre, le fer et le cupro-phosphore.

4. Procédé selon l'une quelconque des revendications 1 à 3, **caractérisé en ce que** l'on utilise, pour le liant métallique, une poudre constituée de particules dont au moins 90 % en poids a une granulométrie de valeur comprise entre 80 % et 120 % de la granulométrie moyenne de cette poudre.

5. Procédé selon l'une quelconque des revendications 1 à 4, **caractérisé en ce que** l'on utilise, pour les charges sous forme de particules dures, une poudre d'au moins un des matériaux du groupe comprenant des oxydes métalliques, verres, des carbures et des métaux.

6. Procédé selon l'une quelconque des revendications 1 à 5, **caractérisé en ce que** l'on utilise, pour les charges sous forme de particules dures, une ou plusieurs poudres chacune constituée de particules dont au moins 90 % en poids a une granulométrie de valeur comprise entre 80 % et 120 % de la granulométrie moyenne de cette poudre.

7. Procédé selon l'une quelconque des revendications 1 à 6 **caractérisé en ce que** le mélange des poudres est réalisé en commençant par celles de densités les plus élevées, puis celles de densités les plus faibles par ordre croissant de granulométrie.

8. Procédé selon la revendication 7, **caractérisé en ce que** chaque ajout de poudre est suivi d'un temps de mélange compris entre environ 2 et 5 minutes.

9. Procédé selon l'une quelconque des revendications 1 à 8, **caractérisé en ce que** la mise en forme du mélange de poudres est réalisée par compression à froid.

10. Procédé selon la revendication 9, **caractérisé en ce que** la compression du mélange de poudres est réalisée à une pression comprise entre environ 500 et 800 MPa.

11. Procédé selon l'une quelconque des revendications 9 et 10, **caractérisé en ce que** la compression à froid est réalisée sur presse en élevant progressivement la pression par déplacement relatif des plateaux de la presse à une vitesse comprise entre environ 1 et 50 mm/seconde.

12. Procédé selon l'une quelconque des revendications 9 à 11, **caractérisé en ce que** la compression du mélange de poudres est réalisée de manière à donner une forme voisine de celle de l'élément de friction à réaliser, et la mise en forme définitive est réalisée par le forgeage à chaud.

13. Procédé selon l'une quelconque des revendications 1 à 12 **caractérisé en ce que** le premier frittage est réalisé sous atmosphère réductrice, à une température comprise entre environ 800 et 1000° C et pendant une durée d'environ 15 à 30 minutes.

14. Procédé selon l'une quelconque des revendications 1 à 14, **caractérisé en ce que** le second frittage est réalisé sous atmosphère réductrice, à une température comprise entre environ 800 et 1000° C et pendant une durée d'environ 15 à 30 minutes.

15. Procédé selon l'une quelconque des revendications 1 à 14, **caractérisé en ce que** le forgeage à chaud est réalisé sous atmosphère réductrice, à une température comprise entre environ 750 et 900° C.

16. Procédé selon l'une quelconque des revendications 1 à 15, **caractérisé en ce que** le forgeage à chaud est réalisé sous une pression comprise entre environ 800 et 1000 MPa.

17. Procédé selon l'une quelconque des revendications 1 à 16, **caractérisé en ce que** l'on assemble l'élément de friction à un insert lors de sa fabrication.

18. Procédé selon la revendication 17, **caractérisé en ce que** l'insert est une collerette métallique entourant une base de l'élément de friction en forme de plot.

19. Procédé selon l'une quelconque des revendications 17 et 18, **caractérisé en ce que** l'insert est assemblé à l'élément de friction lors de l'étape de forgeage à chaud.

20. Plot de friction forgé pour garniture de frein réalisé en un matériau fritté constitué d'un liant métallique, de charges sous forme de particules dures et de lubrifiant sous forme de graphite, et comprenant une embase solidaire du reste du plot, **caractérisé en ce que** le liant métallique représente entre 60 et 90% en poids du plot et est formé de poudre dont la granulométrie ne dépasse pas 250 microns, les charges représentent entre 2 et 30% en poids du plot et sont formées de poudre dont la granulométrie ne dépasse pas 250 microns, et le lubrifiant représente entre 2 et 15% en poids du plot et est sous forme de poudre dont la granulométrie ne dépasse pas 600 microns.

21. Plot de friction selon la revendication 20, **caractérisé en ce que** le liant métallique est constitué par au moins un des matériaux du groupe comprenant le bronze, le cuivre, le fer et le cupro-phosphore.

22. Plot de friction selon l'une quelconque des revendications 20 et 21, **caractérisé en ce que** les charges sont constituées par au moins un des matériaux du groupe comprenant des oxydes métalliques, des verres, des carbures métalliques et des métaux.

23. Plot de friction selon l'une quelconque des revendications 20 à 22, **caractérisé en ce qu'**il est formé à partir de poudres contenant environ 58 parties en poids de poudre de bronze, 10 parties en poids de poudre de graphite, 10 parties en poids de poudre de fer, 10 parties en poids de poudre de molybdène, 10 parties en poids de poudre de borosilicate d'aluminium et de sodium, et 2 parties en poids de poudre de carbure de bore.

24. Plot de friction selon l'une quelconque des revendications 20 à 23, **caractérisé en ce qu'**il comporte une embase formée d'une seule pièce avec le reste du plot (10).

25. Plot de friction selon l'une quelconque des revendications 20 à 23, **caractérisé en ce qu'**il est muni d'une collerette métallique (36) définissant une embase et liée au matériau fritté.

26. Garniture de frein, **caractérisée en ce qu'**elle comporte au moins un plot de friction selon l'une quelconque des revendications 20 à 25.

27. Garniture de frein, selon la revendication 26 **caractérisée en ce qu'**elle comporte plusieurs plots de friction dont l'assemblage sur la garniture est réalisé par des moyens mécaniques coopérant avec les embases des plots.

28. Dispositif de freinage comprenant au moins une garniture de frein selon l'une quelconque des revendications 26 et 27 coopérant avec un disque de frein réalisé, au moins dans la ou chaque partie formant revêtement de friction, en un matériau de friction choisi dans le groupe comportant les aciers, l'aluminium et ses alliages, les matériaux à base de carbone et les matériaux composites thermostructuraux.

29. Dispositif selon la revendication 28, **caractérisé en ce que** le disque de frein est réalisé, au moins dans la ou chaque partie formant revêtement de friction, en un matériau de friction formé par de l'aluminium silicié.

30. Dispositif selon la revendication 28, **caractérisé en ce que** le disque de frein est réalisé, au moins dans le ou chaque partie formant revêtement de friction, en un matériau de friction choisi parmi les matériaux composites à matrice métallique, les matériaux composite à matrice céramique, les matériaux composites carbone-carbone, et les matériaux composites carbone-carbone siliciurés.

31. Dispositif selon la revendication 28, **caractérisé en ce que** le matériau de friction du disque de frein est en composite carbone-carbone siliciuré.

32. Dispositif selon l'une quelconque des revendications 26 à 30, **caractérisé en ce que** le disque de frein est réalisé en plusieurs secteurs, au moins dans la ou chaque partie formant revêtement de friction.

33. Dispositif selon l'une quelconque des revendications 26 à 32, **caractérisé en ce que** le disque de frein est ventilé.

34. Ensemble de freinage ferroviaire comportant au moins un dispositif de freinage selon l'une quelconque des revendications 25 à 33.

## Patentansprüche

1. Verfahren zur Herstellung eines Reibelementes aus einem Material, das ein metallisches Bindemittel, mindestens ein Gleitmittel und Füller in Form harter Teilchen aufweist, wobei das Verfahren die Schritte des Mischens von Pulvern der verschiedenen Bestandteile des Materials, des in Form Bringens des Gemisches und des Sinterns enthält, **dadurch gekennzeichnet, daß** man mindestens für das metallische Bindemittel und die harten Teilchen Pulver verwendet, dessen Kornklassierung 250 Mikrometer nicht überschreitet, und dadurch, daß das Gemisch von Pulvern, nachdem es in Form gebracht wurde, einem ersten Sintern, dann einem Warmschmieden und darauf einem zweiten Sintern unterzogen wird.

2. Verfahren nach Anspruch 1, **dadurch gekennzeichnet, daß** man für das Gleitmittel ein Graphitpulver mit Kristallstruktur, dessen Kornklassierung 600 Mikrometer nicht überschreitet, verwendet.

3. Verfahren nach Anspruch 1 oder 2, **dadurch gekennzeichnet, daß** man als das metallische Bindemittel ein Pulver aus mindestens einem der Materialien der Gruppe, die Bronze, Kupfer, Eisen und Phosphorkupfer aufweist, verwendet.

4. Verfahren nach einem der Ansprüche 1 bis 3, **dadurch gekennzeichnet, daß** man als das metallische Bindemittel ein Pulver verwendet, das aus Teilchen besteht, bei dem mindestens 90 Gew.% eine Kornklassierung eines Werts zwischen 80 % und 120 % der mittleren Kornklassierung dieses Pulvers haben.

5. Verfahren nach einem der Ansprüche 1 bis 4, **dadurch gekennzeichnet, daß** man als die Füller in Form harter Teilchen ein Pulver aus mindestens einem der Materialien der Gruppe, die Metalloxide, Gläser, Carbide und Metalle aufweist, verwendet.

6. Verfahren nach einem der Ansprüche 1 bis 5, **dadurch gekennzeichnet, daß** man als Füller in Form harter Teilchen ein oder mehrere Pulver verwendet, von denen jedes aus Teilchen besteht, von denen mindestens 90 Gew.% eine Kornllassierung eines Werts zwischen 80% und 120% der mittleren Kornklassierung dieses Pulvers haben.

7. Verfahren nach einem der Ansprüche 1 bis 6, **dadurch gekennzeichnet, daß** das Gemisch der Pulver hergestellt wird, indem man mit denjenigen der größten Dichten beginnt, dann denjenigen der geringsten Dichten in der Reihenfolge wachsender Kornklassierung.

8. Verfahren nach Anspruch 7, **dadurch gekennzeichnet, daß** jeder Zugabe von Pulver eine Zeit des Mischens zwischen etwa 2 und 5 Minuten folgt.

9. Verfahren nach einem der Ansprüche 1 bis 8, **dadurch gekennzeichnet, daß** das in Form Bringen des Gemisches von Pulvern durch Kaltpressen durchgeführt wird.

10. Verfahren nach Anspruch 9, **dadurch gekennzeichnet, daß** das Pressen des Gemisches von Pulvern bei einem Druck zwischen etwa 500 und 800 MPa durchgeführt wird.

11. Verfahren nach Anspruch 9 oder 10, **dadurch gekennzeichnet, daß** das Kaltpressen in einer Presse durchgeführt wird, indem man den Druck durch relative Verschiebung der Platten der Presse mit einer Geschwindigkeit zwischen etwa 1 und 50 mm/s fortschreitend erhöht.

12. Verfahren nach einem der Ansprüche 9 bis 11, **dadurch gekennzeichnet, daß** das Pressen des Gemisches von Pulvern in einer Weise durchgeführt wird, daß eine Gestalt verliehen wird, die derjenigen des herzustellenden Reibelements nahe ist, und das in die endgültige Gestalt Bringen durch das Warmschmieden durchgeführt wird.

13. Verfahren nach einem der Ansprüche 1 bis 12, **dadurch gekennzeichnet, daß** das erste Sintern in reduzierender Atmosphäre bei einer Temperatur zwischen etwa 800 und 1000 °C und während einer Dauer von etwa 15 bis 30 Minuten durchgeführt wird.

14. Verfahren nach einem der Ansprüche 1 bis 14, **dadurch gekennzeichnet, daß** das zweite Sintern in reduzierender Atmosphäre bei einer Temperatur zwischen etwa 800 und 1000 °C und während einer Dauer von etwa 15 bis 30 Minuten durchgeführt wird.

15. Verfahren nach einem der Ansprüche 1 bis 14, **dadurch gekennzeichnet, daß** das Warmschmieden in reduzierender Atmosphäre bei einer Temperatur zwischen etwa 750 und 900 °C durchgeführt wird.

16. Verfahren nach einem der Ansprüche 1 bis 15, **dadurch gekennzeichnet, daß** das Warmschmieden bei einem Druck zwischen etwa 800 und 1000 MPa durchgeführt wird.

17. Verfahren nach einem der Ansprüche 1 bis 16, **dadurch gekennzeichnet, daß** man das Reibelement bei seiner Herstellung mit einem Einsatz zusammenfügt.

18. Verfahren nach Anspruch 17, **dadurch gekennzeichnet, daß** der Einsatz ein metallischer Bund ist, der eine Basis des Reibelementes in Gestalt eines Klotzes umgibt.

19. Verfahren nach Anspruch 17 oder 18, **dadurch gekennzeichnet, daß** der Einsatz bei dem Schritt des Warmschmiedens mit dem Reibelement zusammengefügt wird.

20. Geschmiedeter Reibklotz für einen Bremsbelag, der hergestellt ist aus einem Sintermaterial, das gebildet wird von einem metallischen Bindemittel, Füller in Form von harten Teilchen und einem Gleitmittel in Form von Graphit, und der einen mit dem übrigen Klotz einstückigen Ansatz aufweist, **dadurch gekennzeichnet, daß** das metallische Bindemittel zwischen 60 und 90 Gew.% des Klotzes darstellt und von Pulver gebildet wird, dessen Kornklassierung 250 m nicht überschreitet, daß der Füller zwischen 2 und 30 Gew.% des Klotzes darstellen und von Pulver gebildet wird, dessen Kornklassierung 250 m nicht überschreitet, und daß das Gleitmittel zwischen 2 und 15 Gew.% des Klotzes darstellt und in Form eines Pulvers ist, dessen Kornklassierung 600 m nicht überschreitet.

21. Reibklotz nach Anspruch 20, **dadurch gekennzeichnet, daß** das metallische Bindemittel gebildet wird von mindestens einem der Materialien der Gruppe, die Bronze, Kupfer, Eisen und Phosphorkupfer aufweist.

22. Reibklotz nach Anspruch 20 oder 21, **dadurch gekennzeichnet, daß** der Füller von mindestens einem der Materialien der Gruppe, die Metalloxide, Gläser, Metallcarbide und Metalle aufweist, gebildet wird.

23. Reibklotz nach einem der Ansprüche 20 bis 22, **dadurch gekennzeichnet, daß** er hergestellt ist ausgehend von Pulvern, die etwa 58 Gewichtsteile Bronzepulver, 10 Gewichtsteile Graphitpulver, 10 Gewichtsteile Eisenpulver, 10 Gewichtsteile Molybdänpulver, 10 Gewichtsteile Pulver von Aluminiumund Natrium-borosilicat und 2 Gewichtsteile Borcarbidpulver enthalten.

24. Reibklotz nach einem der Ansprüche 20 bis 23, **dadurch gekennzeichnet, daß** er einen Ansatz aufweist, der aus einem Stück mit dem restlichen Klotz (10) hergestellt ist.

25. Reibklotz nach einem der Ansprüche 20 bis 23, **dadurch gekennzeichnet, daß** er mit einem metallischen Bund (36) ausgestattet ist, der einen Ansatz definiert und mit dem Sintermaterial verbunden ist.

26. Bremsbelag, **dadurch gekennzeichnet, daß** er mindestens einen Reibklotz nach einem der Ansprüche 20 bis 25 aufweist.

27. Bremsbelag nach Anspruch 26, **dadurch gekennzeichnet, daß** er mehrere Reibklötze aufweist, deren Zusammenfügen zu dem Belag durch mechanische Mittel, die mit den Ansätzen der Klötze zusammenwirken, verwirklicht wird.

28. Bremsvorrichtung, aufweisend mindestens einen Bremsbelag nach Anspruch 26 oder 27, der mit einer Bremsscheibe zusammenwirkt, die mindestens an dem oder jedem Bereich der eine Reibauflage bildet, aus einem Reibmaterial hergestellt ist, das ausgewählt ist aus der Gruppe, die Stähle, Aluminium und seine Legierungen, Materialien auf der Basis von Kohlenstoff und bei erhöhter Temperatur tragfähige Verbundmaterialien aufweist.

29. Vorrichtung nach Anspruch 28, **dadurch gekennzeichnet, daß** die Bremsscheibe mindestens an dem oder jedem Bereich der Reibauflage bildet, aus einem Reibmaterial hergestellt ist, das von Aluminiumsilicid gebildet wird.

30. Vorrichtung nach Anspruch 28, **dadurch gekennzeichnet, daß** die Bremsscheibe mindestens an dem oder jedem Bereich der Reibauflage bildet, aus einem Reibmaterial hergestellt ist, das ausgewählt ist unter den Verbundmaterialien mit Metallmatrix, den Verbundmaterialien mit Keramikmatrix, den Kohlenstoff-Kohlenstoff-Verbundmaterialien und den Kohlenstoff-Kohlenstoff-Silicid-Verbundmaterialien.

31. Vorrichtung nach Anspruch 28, **dadurch gekennzeichnet, daß** das Reibmaterial der Bremsscheibe aus einem Kohlenstoff-Kohlenstoff-Silicid-Verbundmaterial ist.

32. Vorrichtung nach einem der Ansprüche 26 bis 30, **dadurch gekennzeichnet, daß** die Bremsscheibe mindestens an dem oder jedem Bereich der Reibauflage bildet, in mehreren Sektoren hergestellt ist.

33. Vorrichtung nach einem der Ansprüche 26 bis 32, **dadurch gekennzeichnet, daß** die Bremsscheibe belüftet ist.

34. Eisenbahnbremsanordnung aufweisend mindestens eine Bremsvorrichtung nach einem der Ansprüche 25 bis 33.

## Claims

1. Method of manufacturing a friction element made of a material comprising a metallic binder, at least one lubricant and fillers in the form of hard particles, the method comprising the steps of blending powders of the various constituent parts of the material, shaping the mixture, and sintering, **characterized in that** use is made, at least for the metallic binder and the hard particles, of powders the particle size of which does not exceed 250 microns, and **in that** the blend of powders, having been shaped, is subjected to a first sintering operation, then to a hot forging operation and then to a second sintering operation.

2. Method according to Claim 1, **characterized in that** use is made, for the lubricant, of a powder of graphite of crystalline structure, the particle size of which does not exceed 600 microns.

3. Method according to either one of Claims 1 and 2, **characterized in that** use is made, for the metallic binder, of a powder of at least one of the materials of the group comprising bronze, copper, iron and phosphorized copper.

4. Method according to any one of Claims 1 to 3, **characterized in that** use is made, for the metallic binder, of a powder consisting of particles at least 90% by weight of which have a particle size of between 80% and 120% of the mean particle size of this powder.

5. Method according to any one of Claims 1 to 4, **characterized in that** use is made, for the fillers in the form of hard particles, of a powder of at least one of the materials of the group comprising metal oxides, glasses, carbides and metals.

6. Method according to any one of Claims 1 to 5, **characterized in that** use is made, for the fillers in the form of hard particles, of one or more powders each consisting of particles at least 90% by weight of which have a particle size of between 80% and 120% of the mean particle size of this powder.

7. Method according to any one of Claims 1 to 6, **characterized in that** the blend of powders is produced starting with those of highest density, then those of lowest density, in increasing order of particle size.

8. Method according to Claim 7, **characterized in that** each addition of powder is followed by a blending time of between 2 and 5 minutes.

9. Method according to any one of Claims 1 to 8, **characterized in that** the blend of powders is shaped by cold compression.

10. Method according to Claim 9, **characterized in that** the blend of powders is compressed at a pressure of between about 500 and 800 MPa.

11. Method according to either one of Claims 9 and 10, **characterized in that** the cold compression is performed on a press by gradually raising the pressure by relative displacement of the platens of the press at a rate of between about 1 and 50 mm/second.

12. Method according to any one of Claims 9 to 11, **characterized in that** the blend of powders is compressed in such a way as to give a shape similar to that of the friction element that is to be produced, and definitive shaping is performed by hot forging.

13. Method according to any one of Claims 1 to 12, **characterized in that** the first sintering operation is performed under a reducing atmosphere, at a temperature of between about 800 and 1000°C, and for a duration of about 15 to 30 minutes.

14. Method according to any one of Claims 1 to 14, **characterized in that** the second sintering operation is performed under a reducing atmosphere, at a temperature of between about 800 and 1000°C, and for a duration of about 15 to 30 minutes.

15. Method according to any one of Claims 1 to 14, **characterized in that** the hot forging is performed under a reducing atmosphere at a temperature of between about 750 and 900°C.

16. Method according to any one of Claims 1 to 15, **characterized in that** the hot forging operation is performed at a pressure of between about 800 and 1000 MPa.

17. Method according to any one of Claims 1 to 16, **characterized in that** the friction element is assembled with an insert during its manufacture.

18. Method according to Claim 17, **characterized in that** the insert is a metal collar surrounding a base of the friction element in the form of a pad.

19. Method according to either one of claims 17 and 18, **characterized in that** the insert is assembled with the friction element during the hot forging step.

20. Forged friction pad for a brake lining made of a sintered material consisting of a metallic binder, of fillers in the form of hard particles and or lubricant in the form of graphite, and comprising a base secured to the remainder of the pad, **characterized in that** the metallic binder represents between 60 and 90% by weight of the pad and is formed of powder the particle size of which does not exceed 250 microns, the fillers represent between 2 and 30% by weight of the pad and are formed of powder the particle size of which does not exceed 250 microns, and the lubricant represents between 2 and 15% by weight of the pad and is in the form of a powder the particle size of which does not exceed 600 microns.

21. Friction pad according to Claim 20, **characterized in that** the metallic binder consists of at least one of the materials of the group comprising bronze, copper, iron and phosphorized copper.

22. Friction pad according to either one of Claims 20 and 21, **characterized in that** the fillers consist of at least one of the materials of the group comprising metal oxides, glasses, metal carbides and metals.

23. Friction pad according to any one of Claims 20 to 22, **characterized in that** it is formed from powders containing about 58 parts by weight of bronze powder, 10 parts by weight of graphite powder, 10 parts by weight of iron powder, 10 parts by weight of molybdenum powder, 10 parts by weight of aluminium and sodium borosilicate powder and 2 parts by weight of boron carbide powder.

24. Friction pad according to any one of Claims 20 to 23, **characterized in that** it comprises a base formed as a single piece with the remainder of the pad (10).

25. Friction pad according to any one of Claims 20 to 23, **characterized in that** it is equipped with a metal collar (36) defining a base and connected to the sintered material.

26. Brake lining, **characterized in that** it comprises at least one friction pad according to any one of Claims 20 to 25.

27. Brake lining according to Claim 26, **characterized in that** it comprises several friction pads, which are assembled to the lining by mechanical means collaborating with the bases of the pads.

28. Braking device comprising at least one brake lining according to either one of Claims 26 and 27 collaborating with a brake disc made, at least in the or each part that forms a friction coating, of a friction material chosen from the group comprising steels, aluminium and its alloys, carbon-based materials and thermostructural composite materials.

29. Device according to Claim 28, **characterized in that** the brake disc is made, at least in the or each part forming a friction coating, of a friction material formed of silicon-aluminium.

30. Device according to Claim 28, **characterized in that** the brake disc is made, at least in the or each part forming a friction coating, of friction material chosen from metal-matrix composites, ceramic-matrix composites, carbon-carbon composites, and silicided carbon-carbon composites.

31. Device according to Claim 28, **characterized in that** the friction material of the brake disc is made of silicided carbon-carbon composite.

32. Device according to any one of Claims 26 to 30, **characterized in that** the brake disc is made in several sectors, at least in the or each part forming a friction coating.

33. Device according to any one of Claims 26 to 32, **characterized in that** the brake disc is ventilated.

34. Railway braking assembly comprising at least one braking device according to any one of Claims 25 to 33.
